# EUROPEAN PATENT APPLICATION

(11) **EP 2 690 816 A2**
(43) Date of publication of application: **29.01.2014**
(21) Application number: 13177842.5
(22) Date of filing: 24.07.2013
(51) Int. Cl.: H04L 5/00

(54) **Apparatuses and methods for signaling coordinated multi-point (comp) measurement configuration**

(30) Priority: 24.07.2012 US 201261674864 P; 01.08.2012 US 201261678293 P; 10.08.2012 US 201261681976 P; 18.07.2013 US 201313945210
(71) Applicant: Acer Incorporated, Hsichih, New Taipei City 221 (TW)
(72) Inventor: Ye, Shiang-Rung, New Taipei City 221 (TW)
(74) Representative: Michalski Hüttermann & Partner Patentanwälte

(57) **Abstract**

A mobile communication device is provided with a wireless module and a controller module. The wireless module performs wireless transceiving to and from a cellular station. The controller module configures a plurality of Channel State Information-Reference Signal (CSI-RS) resources according to a Radio Resource Control (RRC) message received from the cellular station via the wireless module, and receives a Medium Access Control (MAC) Control Element (CE) from the cellular station via the wireless module. Also, the controller module adds or removes one of the CSI-RS resources to or from a measurement set for Coordinated MultiPoint (CoMP) according to the MAC CE.

## Description

### CROSS REFERENCE TO RELATED APPLICATIONS

This Application claims the benefit of U.S. Provisional Application No. 61/674,864, filed on July 24, 2012, the entirety of which is incorporated by reference herein. This Application claims the benefit of U.S. Provisional Application No. 61/678,293, filed on August 01, 2012, the entirety of which is incorporated by reference herein. This Application claims the benefit of U.S. Provisional Application No. 61/681,976, filed on August 10, 2012, the entirety of which is incorporated by reference herein.

### BACKGROUND OF THE INVENTION

### Field of the Invention

The invention generally relates to Coordinated Multi-Point (CoMP) measurement configuration and, more particularly, to signaling CoMP measurement configuration between a mobile communication device and a cellular station by a Medium Access Control (MAC) Control Element (CE).

### Description of the Related Art

With rapid developments in ubiquitous computing and networking, various wireless technologies have been developed, such as the WLAN technologies, including the Wireless Fidelity (WiFi) technology, and Bluetooth technology, etc., and the cellular network technologies (or called Wide Area Network (WAN) technologies), including the Global System for Mobile communications (GSM) technology, General Packet Radio Service (GPRS) technology, Enhanced Data rates for Global Evolution (EDGE) technology, Wideband Code Division Multiple Access (WCDMA) technology, Code Division Multiple Access 2000 (CDMA-2000) technology, Time Division-Synchronous Code Division Multiple Access (TD-SCDMA) technology, Worldwide Interoperability for Microwave Access (WiMAX) technology, Long Term Evolution (LTE) technology, LTE-Advanced technology, and Time- Division LTE (TD-LTE) technology, etc.

Taking the LTE-Advanced technology as an example, Coordinated Multi-Point (CoMP) has been proposed and is widely recognized as a spectrally efficient technique for improving coverage, cell-edge throughput, and/or system efficiency. By applying the CoMP technique, multiple evolved Node-Bs (eNBs) may be coordinated to communicate with a User Equipment (UE) at the same time for increasing the transceiving rate of the UE. For the operations of the CoMP technique, the UE is required to measure the downlink channel from the eNBs to the UE according to a plurality of Channel Station Information Reference Signal (CSI-RS) resources and then report the measurement result in the uplink to the serving eNB, wherein each of the CSI-RS resources contains a set of parameters indicating the time, frequency, and power, etc., for the UE to perform the measurement of the specific CSI-RS associated with a respective eNB. However, the cooperating set of eNBs may vary due to movement of the UE, causing frequent updates of the CoMP measurement configuration, i.e., the CSI-RS resources. Thus, it is desirable to have an efficient way of signaling the CoMP measurement configuration between the serving eNB and the UE.

### BRIEF SUMMARY OF THE INVENTION

In a first aspect of the invention, a mobile communication device is provided. The mobile communication device comprises a wireless module and a controller module. The wireless module performs wireless transceiving to and from a cellular station. The controller module configures a plurality of CSI-RS resources according to a Radio Resource Control (RRC) message received from the cellular station via the wireless module, and receives a MAC CE from the cellular station via the wireless module. Also, the controller module adds or removes at least one of the CSI-RS resources to or from a measurement set for CoMP according to the MAC CE.

In a second aspect of the invention, a method for signaling CoMP measurement configuration by a mobile communication device is provided. The method comprises the steps of configuring a plurality of CSI-RS resources according to an RRC message received from a cellular station, receiving a MAC CE from the cellular station, and adding or removing at least one of the CSI-RS resources to or from a measurement set for CoMP according to the first MAC CE.

In a third aspect of the invention, a cellular station is provided. The cellular station comprises a wireless module and a controller module. The wireless module performs wireless transceiving to and from a mobile communication device. The controller module transmits an RRC message for configuring a plurality of CSI-RS resources to the mobile communication device via the wireless module, and transmitting a MAC CE to the mobile communication device via the wireless module, for the mobile communication device to add or remove at least one of the CSI-RS resources to or from a measurement set for CoMP.

In a fourth aspect of the invention, a method for signaling CoMP measurement configuration by a cellular station is provided. The method comprises the steps of transmitting an RRC message for configuring a plurality of CSI-RS resources to a mobile communication device, and transmitting a MAC CE to the mobile communication device, for the mobile communication device to add or remove at least one of the CSI-RS resources to or from a measurement set for CoMP.

Other aspects and features of the present invention will become apparent to those with ordinarily skilled in the art upon review of the following description of specific embodiments of the mobile communication devices, service networks, and methods for signaling CoMP measurement configuration.

### BRIEF DESCRIPTION OF DRAWINGS

The invention can be more fully understood by reading the subsequent detailed description and examples with references made to the accompanying drawings, wherein:

Fig. 1 is a block diagram of a wireless communications environment according to an embodiment of the invention;

Fig. 2 is a block diagram illustrating the mobile communication device 110 according to an embodiment of the invention;

Fig. 3 is a message sequence chart illustrating the signaling of a CoMP measurement configuration according to an embodiment of the invention;

Fig. 4 is a flow chart illustrating the method for signaling CoMP measurement configuration by a mobile communication device according to an embodiment of the invention; and

Fig. 5 is a flow chart illustrating the method for signaling CoMP measurement configuration by a cellular station according to an embodiment of the invention.

### DETAILED DESCRIPTION OF THE INVENTION

The following description is of the best-contemplated mode of carrying out the invention. This description is made for the purpose of illustrating the general principles of the invention and should not be taken in a limiting sense. It should be understood that the embodiments may be realized in software, hardware, firmware, or any combination thereof.

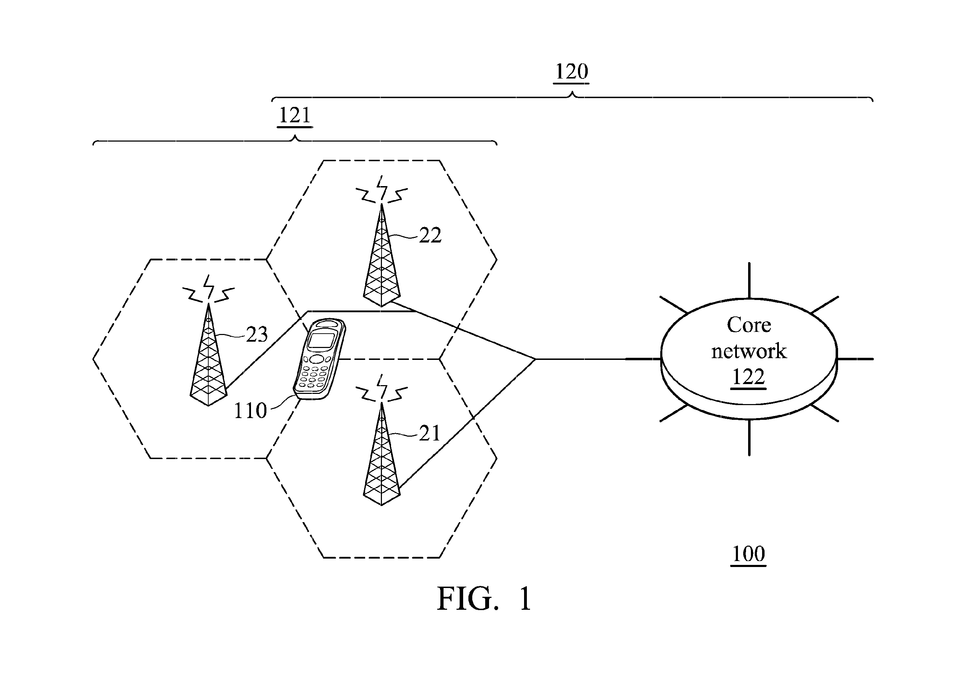

Fig. 1 is a block diagram of a wireless communications environment according to an embodiment of the invention. The wireless communications environment 100 comprises a mobile communication device 110 and a service network 120, wherein the service network 120 comprises an access network 121 and a core network 122. The access network 121 comprises at least three cellular stations 21, 22, and 23, each of which forms a respective wireless transceiving cell coverage. The mobile communication device 110 may communicate with one or more of the cellular stations 21 to 23 to obtain wireless services. Particularly, the access network 121 supports the CoMP technique, which means the cellular stations 21 to 23 may be coordinated (i.e., the cellular stations 21 to 23 may form a CoMP cooperating set) for transmission and reception to and from the mobile communication device 110 for enhancing the transceiving rate of the mobile communication device 110 and improving coverage, cell-edge throughput, and/or system efficiency of the service network 120.

In one embodiment, the service network 120 may be an LTE-Advanced network. The access network 121 may be an Evolved Universal Terrestrial Radio Access Network (E-UTRAN), and each of the cellular stations 21 to 23 may be an evolved Node-B (eNB). The core network 122 may be an Evolved Packet Core (EPC) which includes a Home Subscriber Server (HSS), Mobility Management Entity (MME), Serving Gateway (S-GW), and Packet Data Network Gateway (PDN-GW or P-GW). Alternatively, one of the cellular stations 21 to 23 may be an eNB and the rest of the cellular stations 21 to 23 may be Home eNBs (HeNBs), wherein the eNB forms a macro-cell and the HeNBs form two pico-cells. It is to be understood that, the LTE-Advanced network is merely an illustrative example, and the service network 120 may utilize another wireless technology, as long as the utilized wireless technology supports the CoMP technique, and thus, the invention is not limited thereto.

The mobile communication device 110 may be a smart phone, a panel Personal Computer (PC), a laptop computer, or any computing device supporting the wireless technology utilized by the service network 120. In one embodiment, the mobile communication device 110 may be an LTE-Advanced UE (or called a Mobile Station (MS)). It is to be understood that, the LTE-Advanced UE is merely an illustrative example, and the mobile communication device 110 may utilize another wireless technology, as long as the utilized wireless technology supports the CoMP technique, and thus, the invention is not limited thereto.

Regarding detailed description of the CoMP technique for the LTE-Advanced technology, reference may be made to the 3rd Generation Partnership Project (3GPP) Technical Specification (TS) 36.819. However, the 3GPP specification may only be used to teach the spirit of the invention, and the invention is not limited thereto.

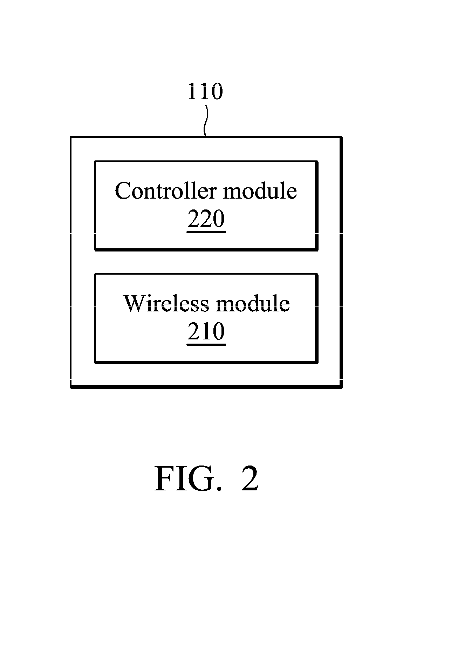

Fig. 2 is a block diagram illustrating the mobile communication device 110 according to an embodiment of the invention. The mobile communication device 110 comprises a wireless module 210 and a controller module 220. The wireless module 210 is responsible for performing the functionality of wireless transmissions and receptions to and from the cellular stations 21 to 23 of the service network 120. The controller module 220 is responsible for controlling the operations of the wireless module 210, and other functional components (not shown), such as a display unit and/or keypad serving as the Man-Machine Interface (MMI), a storage unit storing the program codes of applications or communication protocols, or others. Also, the controller module 220 controls the wireless module 210 for performing the method for signaling CoMP measurement configuration.

To further clarify, the wireless module 210 may be a Radio Frequency (RF) unit (not shown), and the controller module 220 may be a general-purpose processor or a Micro Control Unit (MCU) of a baseband unit (not shown). The baseband unit may contain multiple hardware devices to perform baseband signal processing, including analog to digital conversion (ADC)/digital to analog conversion (DAC), gain adjusting, modulation/demodulation, encoding/decoding, and so on. The RF unit may receive RF wireless signals, convert the received RF wireless signals to baseband signals, which are processed by the baseband unit, or receive baseband signals from the baseband unit and convert the received baseband signals to RF wireless signals, which are later transmitted. The RF unit may also contain multiple hardware devices to perform radio frequency conversion. For example, the RF unit may comprise a mixer to multiply the baseband signals with a carrier oscillated in the radio frequency of the mobile communication system, wherein the radio frequency may be 900MHz, 2100MHz, or 2.6GHz utilized in the LTE-Advanced technology, or others, depending on the wireless technology in use.

Although not shown, each of the cellular stations 21 to 23 at least comprises a wireless module and a controller module, similar to Fig. 2, wherein the wireless module is responsible for performing the functionality of wireless transmissions and receptions to and from the mobile communication device 110, and the controller module is responsible for controlling the operations of the wireless module and interfacing with the core network 122.

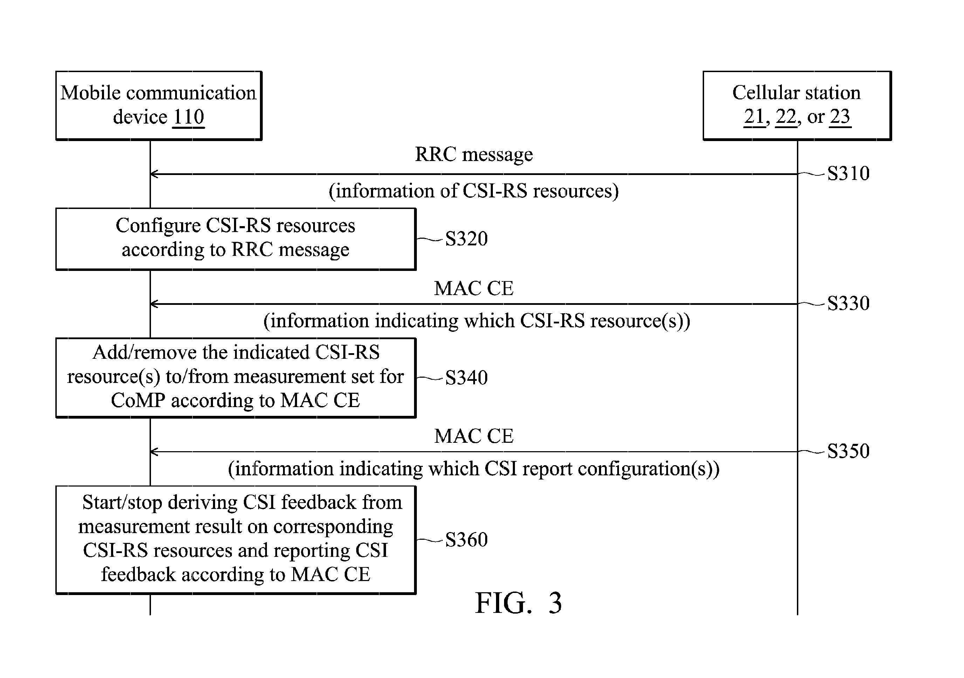

Fig. 3 is a message sequence chart illustrating the signaling of a CoMP measurement configuration according to an embodiment of the invention. In this embodiment, the signaling of the CoMP measurement configuration is performed between the mobile communication device 110 and one of the cellular stations 21 to 23. To begin, the one of the cellular station 21, 22, or 23 transmits an RRC message to the mobile communication device 110 (step S310), wherein the RRC message comprises information of a plurality of CSI-RS resources. Specifically, the RRC message may be an RRCConnectionReconfiguration message or others. When receiving the RRC message, the mobile communication device 110 configures the CSI-RS resources according to the information included in the RRC message (step S320). Each of the CSI-RS resources is uniquely identified by an ID and comprises a set of parameters indicating the frequency where a CSI-RS will be transmitted, the time when the CSI-RS will be transmitted, and the power that will be used by the cellular station to transmit the CSI-RS, etc.

Alternatively, the RRC message in step S310 may also comprise information indicating which of the CSI-RS resources is to be added to the measurement set for CoMP. That is, the RRC message may be used for configuring the CSI-RS resources and setting up the measurement set for CoMP at one time.

Next, the one of the cellular station 21, 22, or 23 transmits a MAC CE to the mobile communication device 110 (step S330), wherein the MAC CE comprises information indicating which of the CSI-RS resources is to be added to or removed from the measurement set for CoMP. In one embodiment, the information included in the MAC CE may be a plurality of bits, each of which indicates whether a corresponding CSI-RS resource should be added to or removed from the measurement set for CoMP. For example, if a bit is set to 1, the corresponding CSI-RS resource should be added to the measurement set for CoMP, and if a bit is set to 0, the corresponding CSI-RS resource should be removed from the measurement set for CoMP. In another embodiment, the information included in the MAC CE may be a plurality of IDs of the CSI-RS resources which should be added to or removed from the measurement set for CoMP.

Subsequently, when receiving the MAC CE, the mobile communication device 110 adds or removes the indicated one(s) of the CSI-RS resources to or from the measurement set for CoMP according to the information included in the MAC CE (step S340). In an exemplary scenario where the CoMP technique is applied for Joint Transmission (JT), Dynamic Point Scheduling (DPS)/muting, or Semi-Static Point Selection (SSPS), the signaling of a CoMP measurement configuration as shown in steps S310 to S340 of Fig. 3 may occur when another cellular station in the cooperating set is selected to be a Transmission Point (TP) but no CSI-RS resource is configured for the TP. At first, the RRC message in step S310 may be used to configure one or more CSI-RS resources for the TP, and the MAC CE in step S330 may be used to add the newly configured CSI-RS resource(s) to the measurement set for CoMP. Later, if the TP is scheduled not to transmit data to the mobile communication device 110, another MAC CE may be transmitted to the mobile communication device 110 for removing the CSI-RS resources corresponding to the TP from the measurement set for CoMP or for releasing the CSI-RS resources.

After that, the one of the cellular station 21, 22, or 23 transmits another MAC CE to the mobile communication device 110 (step S350), wherein the MAC CE comprises information indicating which of the CSI report configurations corresponding to the CSI-RS resources in the measurement set for CoMP is to be activated or deactivated. Specifically, the CSI report configurations are pre-configured by the RRC layer, which specify the CSI feedback for each CSI-RS resource to be measured and reported. In one embodiment, the information included in the MAC CE may be a bitmap in which each bit indicates a respective CSI report configuration to be activated or deactivated.

When receiving the MAC CE, the mobile communication device 110 starts or stops deriving CSI feedback from the measurement result on the corresponding CSI-RS resources and reporting the CSI feedback to the one of the cellular station 21, 22, or 23 according to the information included in the MAC CE (step S360). To further clarify, the CSI feedback may include the Channel Quality Indicator (CQI), Rank Indicator (RI), and/or Precoding Matrix Indicator (PMI), etc., for each CSI-RS resource. With the reported measurement result, the one of the cellular station 21, 22, or 23 may properly determine the parameters used for downlink transmission, such as the radio resource elements, modulation scheme, coding scheme, and power, etc. Particularly, during handover of the mobile communication device 110 from a serving cellular station to a target cellular station, the serving cellular station may forward the measurement result to the target cellular station to assist with the system resource management for CoMP.

In one embodiment, if all CSI report configurations corresponding to the same CSI-RS resource in the measurement set for CoMP are deactivated, the mobile communication device 110 may deactivate the CSI-RS resource and stop measuring the CSI-RS resource and reporting the measurement result to the one of the cellular station 21, 22, or 23 in response to deactivation of the CSI-RS resource. In another embodiment, if a CSI-RS resource in the measurement set for CoMP is activated or deactivated, the mobile communication device 110 may activate or deactivate all of the CSI report configurations corresponding to the CSI-RS resource. In yet another embodiment, the MAC CE may be used to deactivate a Secondary Cell (SCell), and if it does, the measurement set for CoMP corresponding to the deactivated SCell should be deactivated as well. In addition, if a CSI-RS resource in the measurement set for CoMP is to be activated by the MAC CE, the MAC CE may comprise information indicating which of the CSI report configurations corresponding to the CSI-RS resource is to be activated.

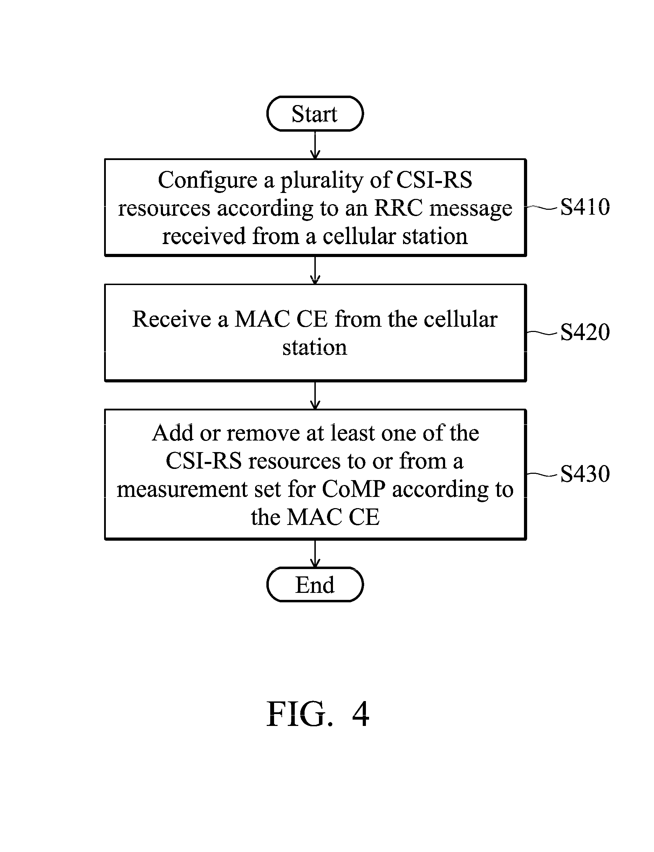

Fig. 4 is a flow chart illustrating the method for signaling CoMP measurement configuration by a mobile communication device according to an embodiment of the invention. To begin, the mobile communication device configures a plurality of CSI-RS resources according to an RRC message received from a cellular station (step S410). Specifically, the RRC message may be an RRCConnectionReconfiguration message which comprises information of the CSI-RS resources, or other messages capable of carrying the information of the CSI-RS resources. Each of the CSI-RS resources is uniquely identified by an ID and comprises a set of parameters indicating the frequency where a CSI-RS will be transmitted, the time when the CSI-RS will be transmitted, and the power that will be used by the cellular station to transmit the CSI-RS, etc.

Next, the mobile communication device receives a MAC CE from the cellular station (step S420), and then adds or removes at least one of the CSI-RS resources to or from a measurement set for CoMP according to the MAC CE (step S430). Specifically, the MAC CE may comprise information indicating which of the CSI-RS resources is to be added to or removed from the measurement set for CoMP. It is noted that, steps S410 to S430 in Fig. 4 are similar to steps S320 to S340 in Fig. 3, and thus, other detailed description of steps S410 to S430 is not repeated here for brevity.

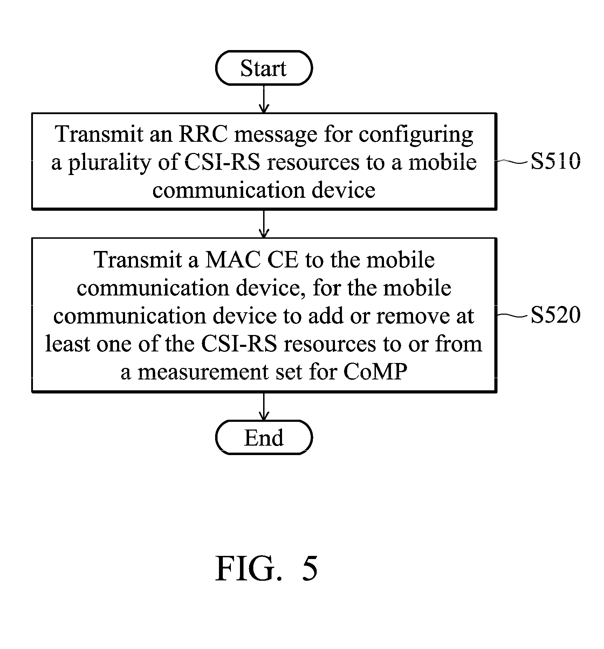

Fig. 5 is a flow chart illustrating the method for signaling CoMP measurement configuration by a cellular station according to an embodiment of the invention. To begin, the cellular station transmits an RRC message for configuring a plurality of CSI-RS resources to a mobile communication device (step S510). Specifically, the RRC message may be an RRCConnectionReconfiguration message which comprises information of the CSI-RS resources, or other messages capable of carrying the information of the CSI-RS resources. Next, the cellular station transmits a MAC CE to the mobile communication device, for the mobile communication device to add or remove at least one of the CSI-RS resources to or from a measurement set for CoMP (step S520). Specifically, the MAC CE may comprise information indicating which of the CSI-RS resources is to be added to or removed from the measurement set for CoMP. It is noted that, steps S510 and S520 in Fig. 5 are similar to steps S310 and S330 in Fig. 3, and thus, other detailed description of steps S510 and S520 is not repeated here for brevity.

Please note that, the invention proposes to use a MAC CE as the means for updating the CoMP measurement configuration after the CoMP measurement configuration has been configured by an RRC message. Advantageously, this alleviates the processing burden of the RRC or upper layers in the communication protocol and improves the signaling performance on both the UE side and the network side.

While the invention has been described by way of example and in terms of preferred embodiment, it is to be understood that the invention is not limited thereto. Those who are skilled in this technology can still make various alterations and modifications without departing from the scope and spirit of this invention. Therefore, the scope of the invention shall be defined and protected by the following claims and their equivalents.

## Claims

1. A mobile communication device, comprising:
a wireless module performing wireless transceiving to and from a cellular station; and
a controller module configuring a plurality of Channel State Information-Reference Signal (CSI-RS) resources according to a Radio Resource Control (RRC) message received from the cellular station via the wireless module, receiving a first Medium Access Control (MAC) Control Element (CE) from the cellular station via the wireless module, and adding or removing at least one of the CSI-RS resources to or from a measurement set for Coordinated Multi-Point (CoMP) according to the first MAC CE.

2. The mobile communication device of claim 1, wherein the RRC message comprises information indicating which of the CSI-RS resources is to be added to the measurement set for CoMP.

3. The mobile communication device of claim 1, wherein the first MAC CE comprises information indicating which of the CSI-RS resources is to be added to or removed from the measurement set for CoMP.

4. The mobile communication device of claim 1, wherein the controller module further releases at least one of the CSI-RS resources according to the first MAC CE.

5. The mobile communication device of claim 1, wherein the controller module further deactivates the measurement set for CoMP, in response to deactivation of a Secondary Cell (SCell) corresponding to the measurement set for CoMP, and stops measuring the CSI-RS resources in the measurement set for CoMP and reporting the measurement result to the cellular station via the wireless module, in response to deactivation of the measurement set for CoMP.

6. The mobile communication device of claim 1, wherein the controller module further receives, from the cellular station via the wireless module, a second MAC CE for activating or deactivating one or more of a plurality of CSI report configurations corresponding to the CSI-RS resources in the measurement set for CoMP.

7. The mobile communication device of claim 6, wherein the controller module further starts or stops deriving CSI feedback from a measurement result on the corresponding CSI-RS resources and reporting the CSI feedback to the cellular station via the wireless module, in response to activation or deactivation of one or more of the CSI report configurations.

8. The mobile communication device of claim 6, wherein the second MAC CE comprises a bitmap in which each bit indicates a respective CSI report configuration to be activated or deactivated.

9. The mobile communication device of claim 6, wherein the controller module further deactivates at least one of the CSI-RS resources in the measurement set for CoMP in response to deactivation of all of the CSI report configurations corresponding to the at least one of the CSI-RS resources in the measurement set for CoMP, and stops measuring the at least one of the CSI-RS resources in the measurement set for CoMP and reporting the measurement result to the cellular network via the wireless module, in response to deactivation of the at least one of the CSI-RS resources in the measurement set for CoMP.

10. The mobile communication device of claim 6, wherein the controller module further activates or deactivates all of the CSI report configurations corresponding to at least one of the CSI-RS resources in the measurement set for CoMP, in response to activation or deactivation of the at least one of the CSI-RS resources in the measurement set for CoMP.

11. The mobile communication device of claim 6, wherein the second MAC CE comprises information indicating which of the CSI report configurations corresponding to one of the CSI-RS resources in the measurement set for CoMP is to be activated, in response to that the one of the CSI-RS resources in the measurement set for CoMP is to be activated by the second MAC CE.

12. A method for signaling Coordinated Multi-Point (CoMP) measurement configuration by a mobile communication device, comprising:
configuring a plurality of Channel State Information-Reference Signal (CSI-RS) resources according to a Radio Resource Control (RRC) message received from a cellular station;
receiving a first Medium Access Control (MAC) Control Element (CE) from the cellular station; and
adding or removing at least one of the CSI-RS resources to or from a measurement set for CoMP according to the first MAC CE.

13. The method of claim 12, further comprising:
releasing at least one of the CSI-RS resources according to the first MAC CE.

14. The method of claim 12, further comprising:
deactivating the measurement set for CoMP in response to deactivation of a Secondary Cell (SCell) corresponding to the measurement set for CoMP; and
stopping measuring the CSI-RS resources in the measurement set for CoMP and reporting the measurement result to the cellular station in response to deactivation of the measurement set for CoMP.

15. The method of claim 12, further comprising:
receiving, from the cellular station, a second MAC CE for activating or deactivating one or more of a plurality of CSI report configurations corresponding to the CSI-RS resources in the measurement set for CoMP.

16. The method of claim 15, further comprising:
starting or stopping deriving CSI feedback from a measurement result on the corresponding CSI-RS resources and reporting the CSI feedback to the cellular station, in response to activation or deactivation of one or more of the CSI report configurations.

17. The method of claim 15, further comprising:
deactivating at least one of the CSI-RS resources in the measurement set for CoMP in response to deactivation of all of the CSI report configurations corresponding to the at least one of the CSI-RS resources in the measurement set for CoMP; and
stopping measuring the at least one of the CSI-RS resources in the measurement set for CoMP and reporting the measurement result to the cellular station in response to deactivation of the at least one of the CSI-RS resources in the measurement set for CoMP.

18. The method of claim 15, further comprising:
activating or deactivating all of the CSI report configurations corresponding to at least one of the CSI-RS resources in the measurement set for CoMP, in response to activation or deactivation of the at least one of the CSI-RS resources in the measurement set for CoMP.

19. A cellular station, comprising:
a wireless module performing wireless transceiving to and from a mobile communication device; and
a controller module transmitting a Radio Resource Control (RRC) message for configuring a plurality of Channel State Information-Reference Signal (CSI-RS) resources to the mobile communication device via the wireless module, and transmitting a first Medium Access Control (MAC) Control Element (CE) to the mobile communication device via the wireless module, for the mobile communication device to add or remove at least one of the CSI-RS resources to or from a measurement set for Coordinated Multi-Point (CoMP).

20. The cellular station of claim 19, wherein the RRC message comprises information indicating which of the CSI-RS resources is to be added to the measurement set for CoMP.

21. The cellular station of claim 19, wherein the first MAC CE comprises information indicating which of the CSI-RS resources is to be added to or removed from the measurement set for CoMP.

22. The cellular station of claim 19, wherein the first MAC CE is transmitted, for the mobile communication device to release at least one of the CSI-RS resources.

23. The cellular station of claim 19, wherein the controller module further receives a measurement result from the mobile communication device via the wireless module, and during handover of the mobile communication device from the cellular station to a target cellular station, forwards the measurement result to the target cellular station.

24. The cellular station of claim 19, wherein the controller module further transmits, to the mobile communication device via the wireless module, a second MAC CE for the mobile communication device to activate or deactivate one or more of a plurality of CSI report configurations corresponding to the CSI-RS resources in the measurement set for CoMP.

25. The cellular station of claim 24, wherein the second MAC CE comprises a bitmap in which each bit indicates a respective CSI report configuration to be activated or deactivated.

26. The cellular station of claim 24, wherein the second MAC CE comprises information indicating which of the CSI report configurations corresponding to one of the CSI-RS resources in the measurement set for CoMP is to be activated, in response to that the one of the CSI-RS resources in the measurement set for CoMP is to be activated by the second MAC CE

27. A method for signaling Coordinated Multi-Point (CoMP) measurement configuration by a cellular station, comprising:
transmitting a Radio Resource Control (RRC) message for configuring a plurality of Channel State Information-Reference Signal (CSI-RS) resources to a mobile communication device; and
transmitting a first Medium Access Control (MAC) Control Element (CE) to the mobile communication device, for the mobile communication device to add or remove at least one of the CSI-RS resources to or from a measurement set for CoMP.

28. The method of claim 27 or 12, wherein the RRC message comprises information indicating which of the CSI-RS resources is to be added to the measurement set for CoMP.

29. The method of claim 27 or 12, wherein the first MAC CE comprises information indicating which of the CSI-RS resources is to be added to or removed from the measurement set for CoMP.

30. The method of claim 27, wherein the first MAC CE is transmitted, for the mobile communication device to release at least one of the CSI-RS resources.

31. The method of claim 27, further comprising:
receiving a measurement result from the mobile communication device; and
during handover of the mobile communication device from the cellular station to a target cellular station, forwarding the measurement result to the target cellular station.

32. The method of claim 27, further comprising:
transmitting, to the mobile communication device, a second MAC CE for the mobile communication device to activate or deactivate one or more of a plurality of CSI report configurations corresponding to the CSI-RS resources in the measurement set for CoMP.

33. The method of claim 32 or 15, wherein the second MAC CE comprises a bitmap in which each bit indicates a respective CSI report configuration to be activated or deactivated.

34. The method of claim 32 or 15, wherein the second MAC CE comprises information indicating which of the CSI report configurations corresponding to one of the CSI-RS resources in the measurement set for CoMP is to be activated, in response to that the one of the CSI-RS resources in the measurement set for CoMP is to be activated by the second MAC CE.
